# EUROPEAN PATENT SPECIFICATION

(11) **EP 2 179 664 B1**
(45) Date of publication and mention of the grant of the patent: **04.09.2013**
(21) Application number: 08425685.8
(22) Date of filing: 22.10.2008
(51) Int. Cl.: A23L 2/70, A23L 2/82, C12G 1/02

(54) **Apparatus for the treatment of a vegetable product**
Vorrichtung zur Behandlung eines pflanzlichen Produkts
Appareil pour le traitement d'un produit végétal

(43) Date of publication of application: 28.04.2010
(73) Proprietor: Noform S.r.l., 30020 Meolo (VE) (IT)
(72) Inventor: Crosato, Remo, 31048 S. Biagio di Callalta, Treviso (IT)
(74) Representative: Citron, Massimiliano

(56) References cited:
- EP-A- 0 737 740
- EP-A- 1 028 162
- WO-A-2005/023977
- DE-C- 10 153
- DE-U1-202005 007 341
- FR-A- 2 596 768
- US-A- 2 181 839
- US-A- 4 978 545
- US-A1- 2001 042 443
- US-A1- 2007 196 535

## Description

The invention relates to an apparatus for the treatment of a vegetable product in the form of crushed material.

Although the invention is useful for the treatment of any vegetable product in the form of crushed material or other liquid, the description that follows as an example will be referred to winemaking, where the invention has proved particularly effective.

Winemaking is accomplished with the help of special tanks, wherein the must is introduced to ferment. After some time, the marc present in the must floats onto the surface and forms a solid cap. Some techniques of winemaking plan at this point to transfer the must into another tank, to separate it from the cap.

In the second tank the must continues its fermentation and gives rise to a sticky sediment at the tank bottom, called dregs, arising from the deposit of mush and material previously in suspension.

The dregs contain important organoleptic components (e.g. they fix the color of wine), and to retrieve and disseminate them in the must the dregs are scraped from the tank bottom with moving bristles. Thus, the dregs re-mixes in the liquid.

The dregs tend to rot and stink, ruining the must. To oppose this undesired effect the side walls of the tank are usually provided with nozzles for injecting O2-bubbles or food air. The oxygenation preserves in time the dregs quality.

For instance, US2007/196535 provides an apparatus usable for storage/refinement of the wine which makes it possible to maintain lees in suspension, avoiding sedimentation and the conventional operations of remixing and manual agitation. Also DE 10 153 C discloses a manual machine for aerating the wine comprising a vertical shaft which spreads air into the wine.

The release of 02 occurs only at the perimeter of the tank and hits the volume of must without completely reaching the dregs, the real target of the 02. The distance between the 02 and the dregs prevents mixing and interaction thereof, and reduces the effectiveness of 0₂.

Then there is the problem of supplying with 0₂ the rotating nozzles.

It is an object of the present invention to provide a reliable fermentation apparatus for a vegetable product in the form of crushed material or other liquid, must preferentially, which solves said problem.

This object is achieved with a device, as claimed in claim 1, having an airtight joint comprising an inlet for feeding the one or more nozzles from the outside. The preferred variants of the invention are defined in the dependent claims.

The joint may comprise an external fixed member having an inlet opening for oxygen, food air or the like, an internal member hermetically and rotatably contained within the external fixed member.

The internal member may have a conduit, formed integrally in it, which is adapted to fluidically communicate with the inlet opening for most of, or all, a round angle, and which opens into the tank.

One or more nozzles may be arranged also on a rotatable support member placed inside the tank at a height greater than the scraping means and unconstrained with respect thereto (rotatable independently from them).

It is advantageous to use driving means for rotating the rotatable support member with opposite rotation to the scraping means, in order to create in the fluid countercurrents fostering oxygenation.

Oxygenation may be controlled in time and space very finely.

To this aim, means for controlling the flow rate of each nozzle independently from each other, and/or means for controlling the spatial orientation of each nozzle independently from each other, may be used.

Then, having one or more nozzles mounted movably inside the tank gives a greater spread of 0₂ or the like in the mixed fluid, so that both the fluid and the scraped, raised dregs oxygenate to a greater extent.

In particular having one or more nozzles with outlets which open at the central inner volume of the tank increases the volume of fluid involved in oxygenation.

If the driving means set in motion the one or more nozzles in sync with the scraping means, a synergy is accomplished between the scraping action and the oxygenating one, because the dregs are raised and oxygenated at the same time and completely.

To better hit a lot of fluid with 02 it is good for one or more nozzles to be arranged on a spacing member extending from a scraping member towards the center and/or the top of the tank, in order to increase the mass of vegetable product involved in the oxygenation.

An apparatus according to the invention will now be described with reference to the drawings, wherein
Fig. 1 shows a winemaking apparatus according to the invention;
Fig. 2 shows a second winemaking apparatus according to the invention;
Fig. 3 shows a magnified detail of the winemaking apparatuses in Fig. 1 and 2;
Fig. 4 shows an enlarged cross-sectional view along the plane IV-IV of fig. 3;

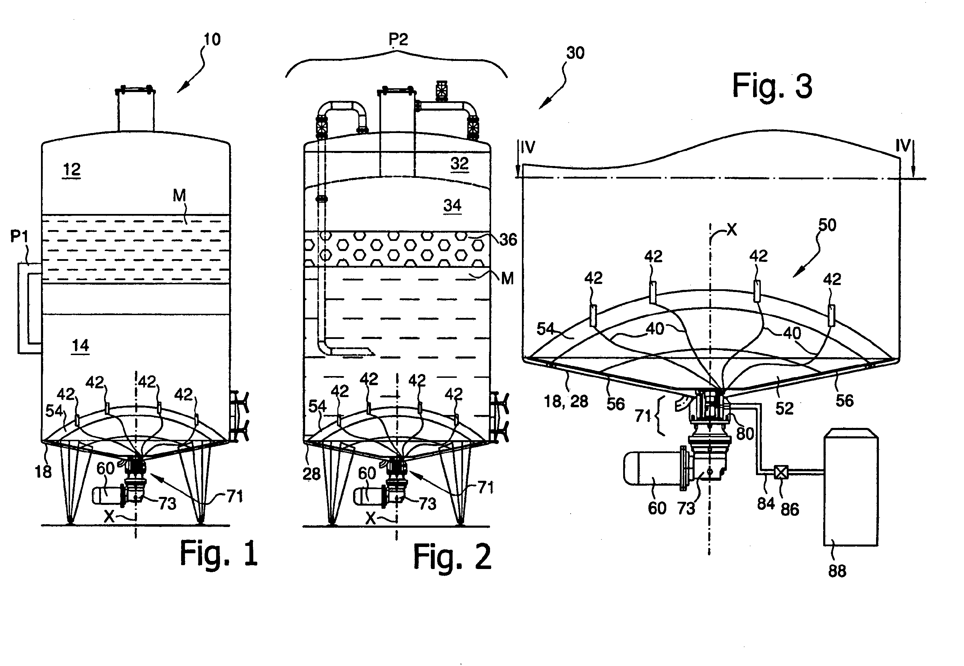

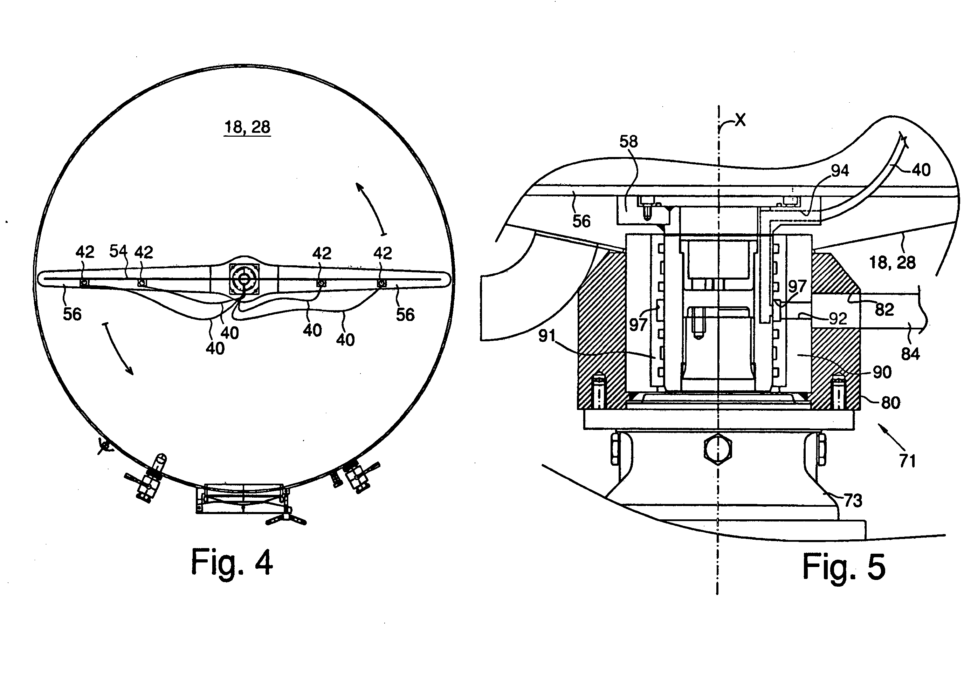

Fig. 4 shows an enlarged detail of fig. 3 in vertical cross-section.

The invention can be adapted to many types of winemaking apparatuses.

For example in fig. 1 there is shown a winemaking apparatus 10 with an upper tank 12 and a lower tank 14. Must M is put to ferment in the tank 12, whereupon its most liquid part will be transferred by gravity (draining) in the tank 14 through a pipe system P1.

In fig. 2, instead, there is shown a winemaking apparatus 30 with an upper tank 32 and a lower tank 34. Must M is put to ferment in the tank 34, and from fermentation a floating marc cap 36 and a quantity of gas which accumulates in the reservoir 32 are generated.

By operating a pipe and the valve system P2 gases are released under the cap 36 for crushing it and spraying it with must.

In both cases the must M sediments and gives rise to a layer of dregs on the tank bottom 18, 28 it is in. The device of the invention, see fig. 3 reference 50, serves to scrape and oxygenate it. Since the device 50 may be used indifferently in the two winemaking apparatuses 10, 30, it is described only once.

The device 50 (Fig. 4) is mounted on the bottom 18, 28, of the tank 14, 34 and consists of a scraping means having two diametrical wings or blades 56 set in rotation by an external motor 60 about a vertical axis X.

On the wings 56 there are fixed a reinforcement vertical fan-shaped plate 52, parallel to the axis X, and a vertical arc-shaped blade 54 resting on the ends of the wings 56. A void space is thus formed between the blade 54 and the plate 52 (the shape of the blade 54 and the plate 52 may be different from those shown).

The wings 56 are connected to a rotatable support 58 (Fig. 5) which is part of an airtight joint 71 transferring rotary motion from the motor 60 to the wings 56 through a gearmotor 73 comprising gears allowing transmission by 90[deg.] and rpm-adaptation of the rotary motion generated by the motor 60 and brought to the wings 56.

The joint 71 is mounted with a fixed collar 80 on the gearmotor 73. The collar 80 presents an opening 82 in which a pipe 84 is sealingly inserted, whose function is to convey 02 or food air or any other gas from a source 88 to the inside of the tank 14, 34. On the pipe 84 there is mounted a valve 86 to adjust such a gas flow.

The collar 80 contains a cylindrical block 90 allowing the hermetic fastening to the bottom 18, 28. The block 90 has a conduit 92, coaxial to the opening 82, which communicates with an inner seal ring 91. The ring 91 is provided with radial seals in contact to which the stem of the support 58 can tightly rotate, driven by a pinion of the gearmotor 73. In the ring 91 an internal vertical conduit 94 is made which on one part opens inside the tank just below the wings 56 and on the other communicates with an annular seat 97 of the same ring 91. The seat 97 communicates with both the inlet of the conduit 94 and the outlet of the conduit 92, therefore an overall path for the gas between the pipe 84 and the outlet of the conduit 94 is established even when the support 58 rotates.

Through the internal construction of the joint 71 it is thus allowed the injection of 02 into the tank 14, 24 with simultaneous rotation of the nozzles 42. The gas transported by the pipe 84 goes through the joint 71 and comes out of the conduit 94, where it is able to feed a plurality of small tubes 40 ending with nozzles 42 located on top of the blade 54 (said nozzles and small tubes could also be attached to the scraping blades 56). The small tubes 40 are integral with the support 58 and can rotate together with it. The nozzles are oriented towards the center or the top of the tank, properly raised and/or spaced from the bottom 18, 28 towards the center of the tank 14, 24 thanks to the blade 54. Thus, greater is the mass of must M concerned by oxygenation.

The operation of the device 50 is as follows.

When the motor 60 sets in rotation the wings 56 and the blade 54, the valve 86 is set open. Therefore, a combined action of three factors is achieved: the wings 56 scrape the dregs from the bottom of the tank, the blade 54 (and also to a lesser extent the plate 52) mixes them in the must and the nozzles 42 oxygenate the dregs raised in, and, the must itself.

The shape of the plate 52 and the blade 54 may also be clearly different, depending on the characteristics of the crushed material (a comb- or mashed-blade or by integrating vanes).

A control unit (e.g. a PLC) may control singly the nozzles 42 , for example their flow rate (through valves on each of them) and/or their spatial orientation, for example through driving of tilt regulators (e.g. linear actuators). This allows establishing an oxygenation program, in which e.g. the flow rate and entry points of 02 vary over time and space.

## Claims

1. Apparatus (10, 30) for the treatment of a vegetable product in the form of crushed material or liquid, preferentially must, comprising
- a tank (14, 34) to contain the vegetable product;
- scraping means (56) for scraping the dregs depositing on the bottom (18, 28) of the tank;
- one or more nozzles (42) connected to a source of oxygen (88), food air or the like, and adapted to oxygenate the dregs,
wherein one or more nozzles (42) are movably mounted inside the tank and integrated in the scraping means (56), the scraping means comprising one or more scraping members (56) rotatably mounted on and in sliding contact with the bottom (18, 28) of the tank, on said one or more scraping members (56) being integrally arranged said nozzles (42),
**characterized by** comprising
a gearmotor (73) which is fixed outside the bottom (18, 28) of the tank (14, 24) and has a shaft operatively connected to at least one scraping member (56) to transfer thereto the rotary motion generated by a motor (60), between said shaft and said at least one scraping member (56) being interposed an airtight joint comprising an inlet for feeding with oxygen, food air or the like the one or more nozzles from the outside.

2. Apparatus according to claim 1, wherein said airtight joint comprises
- an external fixed member (80, 90) having an inlet opening (82) for oxygen, food air or the like,
- an internal member (58) hermetically and rotatably contained within the external fixed member (80, 90), the internal member (58) having a conduit (94) formed integrally in it and adapted to fluidically communicate with said inlet opening (82) for most of, or all, a round angle, and which opens into the tank.

3. Apparatus according to claim 2, wherein the external fixed member (80) contains a cylindrical block (90) allowing the hermetic fastening to the bottom (18, 28) and has a conduit (92), coaxial to said opening (82), which communicates with an inner seal ring (91) provided with radial seals in contact to which the stem of a support (58) for the nozzles can tightly rotate, in said ring (91) an internal vertical conduit 94 being made which on one part opens inside the tank and on the other communicates with an annular seat (97) of the ring (91).

4. Apparatus according to claim 3, wherein the seat (97) communicates with both the inlet of the conduit (94) and the outlet of the conduit (92), thereby establishing an overall path for the gas between the pipe (84) and the outlet of the conduit (94) even when the support 58 rotates.

5. Apparatus according to any one of the claims 1 to 4, wherein one or more nozzles are arranged on a spacing member (54) extending from a scraping member (56) towards the center and/or the top of the tank, in order to increase the mass of vegetable product involved in the oxygenation.

6. Apparatus according to any of the claims 1 to 5, wherein one or more nozzles (42) are arranged on a rotatable support member placed inside the tank at a height greater than the scraping means and rotatable independently therefrom.

7. Apparatus according to claim 6, comprising driving means for rotating the rotatable support member with opposite rotation to the scraping means.

8. Apparatus according to any of the preceding claims, comprising a second tank superimposed to the first from which the must can drain.

9. Apparatus according to any of the preceding claims, comprising means for controlling the flow rate of each nozzle independently from each other.

10. Apparatus according to any of the preceding claims, comprising means for controlling the spatial orientation of each nozzle independently from each other.

## Patentansprüche

1. Gerät (10, 30) für die Behandlung eines pflanzlichen Produkts in Form von zerstoßenem oder flüssigem Material, vorzugsweise Most, bestehend aus
- einem Behälter (14, 34) für das pflanzliche Produkt;
- Abschabevorrichtungen (56) zum Abschaben der abgelagerten Sätze am Boden (18, 28) des Behälters;
- einer oder mehreren Düsen (42), die an die Quelle von Sauerstoff (88), lebensmitteltauglicher Luft oder dergleichen angeschlossen sind, die zum Anreichern mit Sauerstoff der Bodensätze dient;
bei dem eine oder mehrere Düsen (42) beweglich im Behälter montiert und in der Abschabevorrichtung (56) integriert sind, die Abschabevorrichtung aus einem oder mehreren drehbaren Abschabeelementen (56) besteht, die auf und im Gleitkontakt am Boden (18, 28) des Behälters anmontiert sind, und auf einem oder mehreren dieser Abschabeelemente (56) diese Düsen einstückig gebildet sind.
**dadurch gekennzeichnet, dass** es
aus einem Getriebemotor (73), der an der Außenseite des Bodens (18, 28) des Behälters (14, 24) befestigt ist, und aus einer zum Motor gehörenden Welle, die auf zumindest ein angeschlossenes Abschabeelement (56) einwirkt, um die vom Motor (60) erzeugte Drehbewegung zu übertragen, wobei zwischen dieser Welle und zumindest einem dieser Abschabeelemente (56) eine luftdichte Verbindung besteht, die einen Einlass für die externe Versorgung einer oder mehrerer Düsen mit Sauerstoff, lebensmitteltauglicher Luft oder dergleichen beinhaltet.

2. Gerät nach Anspruch 1, bei dem diese luftdichte Verbindung
- ein an der Außenseite befestigtes Element (80, 90) mit einer Einlassöffnung (82) für Sauerstoff, lebensmitteltaugliche Luft oder dergleichen hat,
- ein internes hermetisches und drehbares Element (58) hat, das im befestigten Element an der Außenseite (80, 90) enthalten ist; das interne Element (58) hat eine einstückig gebildete Leitung (94), die sich zur strömungstechnischen Verbindung mit dieser Einlassöffnung (82) eignet, von denen die meisten oder alle einen Vollwinkel bilden und im Behälter münden.

3. Gerät nach Anspruch 2, bei dem ein an der Außenseite befestigtes Element (80) einen zylinderförmigen Block (90) enthält, das die hermetische Befestigung am Boden (18, 28) gestattet und eine gleichachsige Leitung (92) zu dieser Öffnung (82) hat. Der mit der Öffnung verbundene Innendichtring (91) ist mit Wellendichtringen ausgestattet, bei dessen Kontakt sich die Stange einer Halterung (58) für die Düsen hinreichend drehen kann; in diesem Ring (91) ist eine vertikale Innenleitung (94) eingearbeitet, die an einer Seite in den Behälter mündet und an der anderen mit einem ringförmigen Sitz (97) des Ringes (91) in Verbindung ist.

4. Gerät nach Anspruch 3, bei dem der Sitz (97) mit beiden Einlässen der Leitung (97) und dem Auslass der Leitung (92) in Verbindung steht, damit auch bei Drehung der Halterung (58) ein Übergang für das Gas zwischen der Rohrleitung (84) und dem Auslass der Leitung (94) gebildet wird.

5. Gerät nach einem der Ansprüche 1 bis 4, bei dem eine oder mehrere Düsen auf einem Abstandselement (54) angeordnet sind, das sich vom Abschabeelement (54) bis zur Mitte und/oder zur Oberseite des Behälters erstreckt, um die Masse des mit Sauerstoff angereicherten pflanzlichen Produkts zu erhöhen.

6. Gerät nach einem der Ansprüche 1 bis 5, bei dem eine oder mehrere Düsen (42) auf einer drehbaren Tragelements angeordnet sind, das sich im Behälter über der Abschabevorrichtung befindet und sich unabhängig davon dreht.

7. Gerät nach Anspruch 6, bestehend aus Antriebsvorrichtungen für die Drehung des drehbaren Tragelements, das sich gegen die Abschabevorrichtung dreht.

8. Gerät nach einem der vorigen Ansprüche, bestehend aus einem zweiten Behälter, der über dem ersten Behälter gelagert ist, aus dem der Most abfließen kann.

9. Gerät nach einem der vorigen Ansprüche, bestehend aus Vorrichtungen zur Kontrolle der Durchflussrate jeder einzelnen Düse.

10. Gerät nach einem der vorigen Ansprüche, bestehend aus Vorrichtungen zur Kontrolle der räumlichen Ausrichtung jeder einzelnen Düse.

## Revendications

1. Appareil (10, 30) destiné au traitement d'un produit végétal sous une forme écrasée ou liquide, de préférence du moût, comprenant
- une cuve (14, 34) pour contenir le produit végétal ;
- un racloir (56) pour racler les résidus qui se déposent au fond (18, 28) de la cuve ;
- une ou plusieurs buses (42) reliées à une source d'oxygène (88), d'air à usage alimentaire ou d'un autre produit équivalent, et adaptées à l'oxygénation des résidus, dans lequel une ou plusieurs buses (42) montées à l'intérieur de la cuve, sont mobiles et intégrées au racloir (56), le racloir comprenant un ou plusieurs bras de raclage (56) pivotants, qui glissent sur le fond (18, 28) de la cuve, tandis que lesdites buses (42) sont intégralement adaptées sur le ou les bras de raclage (56),
**caractérisé en ce qu'**il comprend
un motoréducteur (73), qui est fixé à l'extérieur du bas (18, 28) de la cuve (14, 24), et comporte un arbre connecté de façon opérationnelle à un ou plusieurs bras de raclage (56) afin de transférer le mouvement de rotation produit par un moteur (60) entre ledit arbre et l'un des bras de raclage (56) au minimum. Un joint étanche à l'air y est interposé, muni d'une entrée pour alimenter une ou plusieurs buses en oxygène, en air à usage alimentaire ou en un autre produit équivalent depuis l'extérieur.

2. Appareil selon la revendication 1, dans lequel ledit joint étanche à l'air comporte
- un bras extérieur fixe (80, 90) pourvu d'une entrée (82) pour l'oxygène, l'air à usage alimentaire ou l'autre produit équivalent,
- un bras intérieur (58) hermétiquement logé et pivotant dans le bras extérieur fixe (80, 90), le bras intérieur (58) étant doté d'un conduit (94) intégralement aménagé dans ce dernier et adapté à la communication fluide avec ladite entrée (82) pour la plupart d'un angle de 360 ° ou pour l'angle de 360° complet s'ouvrant dans la cuve.

3. Appareil selon la revendication 2, dans lequel le bras extérieur fixe (80) contient un bloc cylindrique (90) permettant la fixation hermétique au fond (18, 28), et comporte un conduit (92) coaxial à ladite ouverture (82), qui communique avec une bague d'étanchéité intérieure (91) munie de joints radiaux . Au contact de cette bague, la tige de support (58) des buses peut pivoter fermement, tandis qu'un conduit vertical intérieur 94 est aménagé dans ladite bague (91) et donne, d'un côté, dans la cuve et communique, de l'autre, avec le siège annulaire (97) de la bague (91).

4. Appareil selon la revendication 3, dans lequel le siège (97) communique à la fois avec l'entrée du conduit (94) et la sortie du conduit (92) en établissant une voie de passage générale pour le gaz entre le tuyau (84) et la sortie du conduit (94), même lorsque le support 58 pivote.

5. Appareil selon l'une quelconque des revendications de 1 à 4, dans lequel une ou plusieurs buses sont aménagées sur une entretoise (54) se déployant d'un bras de raclage (56) vers le centre et/ou le sommet de la cuve, afin d'accroître la masse du produit végétal soumise à l'oxygénation.

6. Appareil selon l'une quelconque des revendications de 1 à 5, dans lequel une ou plusieurs buses (42) sont aménagées sur un bras pivotant placé dans la cuve à une hauteur supérieure au racloir et pivotant de façon indépendante par rapport à lui.

7. Appareil selon la revendication 6, comprenant un élément d'entraînement pour animer le bras pivotant d'un mouvement rotatoire opposé au racloir.

8. Appareil selon l'une quelconque des revendications précédentes, comprenant une seconde cuve superposée à la première, d'où s'écoule le moût.

9. Appareil selon l'une quelconque des revendications précédentes, comprenant un dispositif pour contrôler le débit de chaque buse indépendamment des autres.

10. Appareil selon l'une quelconque des revendications précédentes, comprenant un dispositif pour contrôler l'orientation spatiale de chaque buse indépendamment les unes des autres.
